# EUROPEAN PATENT APPLICATION

(11) **EP 1 078 577 A2**
(43) Date of publication of application: **28.02.2001**
(21) Application number: 00201703.6
(22) Date of filing: 12.05.2000
(51) Int. Cl.: A23G 3/00

(54) **Moulded confectionery product comprising vegetable solids**

(30) Priority: 17.08.1999 GB 9919487
(71) Applicant: SOCIETE DES PRODUITS NESTLE S.A., 1800 Vevey (CH)
(72) Inventor: Schmoutz, Daniel, 06100 Perugia (IT); Clement, Patrick, 1630 Bulle (CH)
(74) Representative: Borne, Patrice Daniel

(57) **Abstract**

The invention relates to a new nutritional food product attractive in taste, texture and/or colour, particularly, for children. The food product comprises at least a part of non-cereal vegetable solids and solid fat characterized in that the non-cereal vegetable solids are present under the form of particles in an amount of at least 15 % by weight of the total weight confectionery product and the non-cereal vegetable solids are mixed in a continuous phase of fat to provide a shaped fat-based product upon setting.

## Description

This application relates to a nutritious and shelf stable confectionery product having a perceived high nutritional value with a controlled texture and a flavour of confectionery. More particularly, the invention relates to a bar-shaped, wafer-based, biscuit-based or moulded chocolate or chocolate-like confectionery products.

In the food, the vegetables are perceived as to provide a high nutritional value with all the essential nutrients such as vitamins, fibres and minerals which are necessary to a balanced and regular food diet. The children are often very reluctant to consume raw or cooked vegetables, whose taste and texture appear to them to be much less attractive compared to other types of food. Therefore, the children are the most prone to essential nutrients deficiency because of their attitude toward the vegetables.

EP 0 461 605 A1 relates to a method for manufacturing a health snack food in which a vegetable, fruit, bean or seaweed are used in a large amount as ingredients. The snack food. comprises vegetable, fruit, beans or seaweed paste having a low moisture content and a saccharide content ranging from 5 to 35 % by weight. However, the final product is not very attractive and has a poor texture. It is relatively dry which makes it difficult to chew and swallow, especially for children. This means that the product cannot be viewed as a confectionery product.

WO 83/03524 relates to a process for the preparation of marzipan-like products from fruits and vegetables containing at least 70 mass % of dry substance. The starting material is pulpified and mixed to a concentrated lactalbumen preparation and to a wetable, gel-forming stabilising composition. The final product is shaped and if desired coated by techniques conventionally used in the sweet industry. The final product is a water and oil emulsion which is a gel thus conferring a very special texture of marzipan which does not give a melt sensation in mouth. Moreover, the marzipan product is prepared by cutting pulpified vegetables and mixing the vegetables with the other ingredients. Therefore, the final product keeps its texture of marzipan which is not desirable as the vegetable part keeps its own characteritics and is so easily recognisable by children when they eat the product.

GB 408,368 relates to a method of preparation of sweetmeat consisting of slices of potatoes or other vegetables coated with chocolate. The vegetables are cleaned, sliced thinly and fried or otherwise cooked. The fried slices are then dipped in a melted chocolate and the final coated product is allowed to set. As a result of the method, the product retains inside its intrinsic features of vegetable; i.e., its vegetable texture and taste which make it only externally attractive for children because of the confectionery glazing but which has characteristics that will cause children to reject immediately the product upon biting and/or chewing it. Moreover, the frying of the shortenings makes the product difficult to digest and may promote rancidity over a short period of time.

DE-A-2746479 relates to a confectionery containing adulterant such as shredded dried beet, bran or vegetable fibres to improve digestion and reduces sensation of hunger. Small amounts of vegetable fibres having specific digestive properties are included in the confectionery product mainly to promote the digestion or to serve as appetite suppressant and therefore cannot be found suitable to be consumed by healthy children.

DE-C-4224356 relates to a food based product for making a snack product consumable during a journey or at work. The product comprises a binder such as chocolate or a sugar binder, flavour or preservative and any kind of nutritive materials such as meat, sausage, egg or vegetables. However, the nutritive product is simply mixed in a confectionery binder and therefore it keeps its intrinsic properties of taste and texture which is also not desirable if one wants to propose a product attractive for children.

Therefore, there is a need to manufacture a new highly nutritional and good tasting vegetable containing confectionery product, which can give a melt-in-mouth sensation and which has a relatively high nutritional value.

In particular, an object is to produce a vegetable-based nutritional food which is attractive in taste, texture and/or colour particularly for children.

Another object is to produce a vegetable-based nutritional food as an alternative to fresh vegetables for children but with the characteristics of a chocolate-like confectionery product.

To this end, the present invention relates to a confectionery product with at least a part of which comprises of non-cereal vegetable solids and fat characterized in that the non-cereal vegetable solids are present under the form of particles in an amount of at least 15 % by weight of the total weight confectionery product and the non-cereal vegetable solids are mixed in a continuous phase of fat to provide a shaped fat-based product upon setting.

Ideally, the non-cereal vegetable solids are present in an amount of 30 to 60% by weight so that a significant nutritional value is given to the final confectionery product which can satisfy both the craving for sweet and serve as a valuable adjunct to the daily nutritional intake of an individual, and more particularly to a child.

More particularly, the non-cereal vegetable solids are found in the set product under the form of finely ground particles of the size similar to the size of cocoa solids in solid chocolate so as to confer a texture of confectionery that is comparable to the chocolate texture. Every particle in the fat phase is surrounded by films of fat so as to form embedded vegetable solids in a continuous fat phase. The fat is intended to be solid at room temperature but liquid at the temperature in the mouth.

The particle size reduction of the vegetable solids in the set product is equal to or less than 80 microns, preferably about 40 microns or less, and even more preferably 30 microns or less. The solid vegetable particle fineness is important as part of the vegetable solids can so be used in replacement of part or total of the cocoa solids and/or sugar solids and/or milk solids while keeping the texture of the fat mass when set very similar to the texture of pure chocolate without vegetable solids. In particular, the reduction of the particle size favours a smooth and non-gritty taste and also promotes the flow properties of the product to be moulded. For that, in a preferred embodiment, the vegetable solids are added to the fat and the mixture is refined to the desired particle reduction in roll refiners; i.e., in 3- to 5-cylinder refiners, which are generally used for refining chocolate masses. In an alternative, the size of the vegetable solids' particles can be ground in a grinding mill to normally less than 80 microns, preferably less than 40 microns before adding the ground particles in the conche with the fat for conching without the refining taking place of the fat and vegetable solids mixed together. The theory and the processes used for reducing the particle size of the chocolate is given in "Industrial Chocolate Manufacture and Use" - Third Edition - Edited by S.T. Beckett page 115 to 136; the content of which is incorporated here by reference.

The fat-based phase is mainly used to fix the shape of the vegetable part and to structurally modify the natural texture of the vegetable product which, in the amount as above-defined, can be transformed in a confectionery product such as a chocolate product or a confectionery product that has a texture similar to chocolate. In particular, sufficient amount of fat is needed wherein the vegetable particles are properly coated to form a continous fat phase. The non-cereal vegetable solids are used as one of the main ingredients so as to give the dominant nutritional characteristics to the product. In some cases, the vegetable solids could even replace all the solids and therefore provides the dominant texture of the confectionery. The flavour of vegetable can also be dominant provided it is not overshadowed by the remaining ingredients. The flavour of vegetable may or may not be dominant.

According to one important aspect of the invention, the non-cereal vegetable solids are added to a melted fat phase and homogeneously mixed to the melted phase so that, after setting, a distinctive confectionery texture is achieved thereby. Therefore, the mixture can be set into a wide variety of forms and various configurations. The mixture can be used alone or can also form only a part of a more complex confectionery with multi-portions or layers all combined together.

In the present context, the expression "non-cereal vegetable" may be understood as designating all types of usual vegetables excluding the group of cereals usually used in the confectionery domain to make cereals bars such as wheat, oat, soy bean, rye, corn, sorghum, millet, in flour, grains or germs. The "non-cereal vegetable" component also excludes vegetable oil formulations such as soy bean, corn oil, sunflower oil, olive oil, sesame oil, palm oil, seed oil, and other oleaginous products, as well as, vegetable shortenings or margarine.

More positively, the non-cereal vegetable component of the invention is selected from the group consisting of potatoes, beans, lentils, peas, asparagus, aubergine, basil, beetroot, broccoli, Brussel sprout, cabbage, carrots, cauliflower, celery, chicory, courgette, cucumber, curly kale, fennel, garlic, gherkins, gourd, leeks, lettuce, marrow, mushrooms, okra, onions, parsnip, peppers, plantain, pumpkin, quorn, radish, spinach, spring greens, swede, sweetcorn, tomato, turnip, watercress, yam, zucchini, and any mixture thereof. The composition, description and the main data sources of the vegetables can be found in "The Composition Of Foods", Fifth Edition, by McCance and Widdowson, Copyright of the Royal Society of Chemistry and Ministry of Agriculture, Fisheries and Food, p. 223-271, the description of which is inserted by reference herewith.

The non-cereal vegetable solids are taken from vegetable dried pieces or vegetable dried powder, vegetable distillate or concentrate, vegetable paste or mixtures thereof. In the context of the invention, the vegetable paste or the vegetable distillate or concentrate have vegetable solids of at least 60% by weight of the paste, distillate or concentrate. The vegetable paste and concentrate may generally have vegetable solids of particle size higher than the desired fineness. Therefore, the particle size of the vegetable solids needs to be reduced by grinding the initial vegetable paste or concentrate beforehand or by refining the vegetable component with the fat phase together in a manner similar when refining a chocolate mass. The particle size reduction of the vegetable solids either by prior grinding or by refining the fat mass participates to provide optimum flow properties and yield and plastic viscosities to the mass that make the mass more easily mouldable by the traditional moulding techniques used for moulding normal chocolate chocolate with only cocoa solids. The important factor is that all the particles must be coated with fat, otherwise the product will not flow properly for moulding purposes and will also have the wrong texture in the mouth and will not properly melt in mouth as normal chocolate would do.

In order to provide a continuous fat phase for the coating of the vegetable solids, the fat is present in at least 25 % by weight in the total product. Preferably, the fat represents from 30 to 70 % by weight of the total product. It is preferred that the ratio of Non-cereal vegetable solids : Fat is an amount by weight of 1:2 to 3:1. As aforementioned, sufficient amount of fat is necessary to properly embed the vegetable particles and thus allow the product to be shaped as desired and to be connected to other compounds. When the fat amount is too low relative to the vegetable part, the confectionery texture cannot be properly attained. Surprisingly, the continuous fat phase allows to obtain a confectionery texture of chocolate or similar to chocolate with a good snap and gloss effect. In some cases, the fat phase can also permit to the portion of the confectionery to be aerated so as to achieve creamy or foamy textures at a desired overrun level. Vegetable fat mousse may so be obtained as a major ingredient of the confectionery. When the fat amount is too high, a waxy texture is often obtained which is not suitable as it would confer an unpleasant mouthfeel and also one would not have enough vegetables to have a nutritious product.

In a preferred embodiment of the invention, the main source of fat is chosen among solid fat at room temperature but having good melting properties in mouth. The fat must also be adapted to cause stable fat crystallisation when processed. In particular, the fat should be chosen among those which allow processing of chocolate products in an identical or similar manner to that of cocoa-butter-based product. The fat should preferably crystallise in the same polymorphic form as cocoa butter or equivalents. Preferably, fat is selected among the list consisting of cocoa butter or vegetable fat, or a compound thereof. Cocoa butter, cocoa butter equivalents (CBEs) or cocoa butter replacers (CBRs) are the preferred sources of fat according to the invention as, in addition to their specific crystallisation and processing properties, they also increase the children acceptance when combined to vegetables solids. Cocoa butter equivalents are known to crystallize in the same polymorphic form as cocoa butter that is β form. Cocoa butter replacers (CBRs) are those of lauric type (based on coconut and palm kernel oil) and non-lauric type (usually based on cottonseed or soya bean oil). They are so-called non-tempering fats since they solidify from the melt directly into a stable β' form. Chocolate can also be a source of cocoa butter fat. However, chocolate should not be the unique source of fat as there would be no sufficient fat solids from the chocolate to properly mix with the vegetable solids in a continuous phase since the fat of chocolate already forms the fat matrix of the cocoa solids. As a result, the product would have a poor texture and the vegetable solids would be easily recognisable upon eating. Therefore, the invention has also the object to replace part or all of the cocoa solids by vegetable solids in the whole confectionery to provide a texture of chocolate-like product with vegetable solids replacing at least partially cocoa solids so that the final confectionery has a high nutritive value due to its vegetable content while it keeps an attractive texture close to the chocolate texture.

Suitable amounts of flavouring and/or colouring agents can be added to the mixture of fat and vegetable solids such as cocoa, vanilla, caramel, peppermint, fruit, yoghurt, vegetables flavouring agents, and so on. For example, the fat-based mixture can be coloured or flavoured so as to reinforce the natural colour or flavour of the vegetable contained therein. On the contrary, the natural flavour of the vegetable component can be hidden by a proper amount of other flavour, for example, when the confectionery is intended to be eaten by children. Other additional sources of fat might also complement in small amount the fat phase, which do not have the same properties of crystallisation, such as toffee fats or cow butter fat. Those additional fats are chosen in an amount small enough not to upset the crystallisation of the main fat but to slightly control and/or change the texture of the product; i.e., to make the product softer.

In an embodiment, the portion of the confectionery product further comprises a cereal-based component. For example, the cereal-based component can be chosen among a list consisting of corn (other than sweet corn), oats, wheat, barley, rye, rice, millet, malt and a mixture thereof. The cereal-based component provides a crispier texture and may therefore be present in the form of discrete pieces such as rice cripies, wafer pieces and/or corn flakes. Therefore, the amount of cereal will deeply depend upon the desired degree of crispiness and lightness of the confectionery. The cereal-based component also permits to control the specific gravity of the final texture as the cereal has a relatively low density compared to the non-cereal vegetable and fat-based compound. An amount up to 40% by weight of cereal-based component is desired. An excess of cereals mix is to be avoided as it would make the confectionery portion dry and crumbly and it would also reduce the beneficial organoleptic influence of the non-cereal vegetable which would need to be protected in the confectionery.

In general, an amount of added sugar is necessary to achieve the final texture and taste of the confectionery and to increase the degree of acceptance by the children. The added sugar can be selected from the group consisting of glucose, lactose, fructose, sucrose, maltose, dextrose, polydextrose, maltodextrin, inverted sugar, a product of enzymatic saccharification of starch, and mixture thereof. The sugar can be icing sugar, crystal sugar, etc.. Sugar helps to harden the texture of the fat phase in the confectionery. It also controls the degree of sweetness and can also serve to partly mask the vegetable flavour when desired, as for instance, when it is necessary to increase the degree of acceptance to children. The added sugar is generally present in an amount of 6 % to 15 % by weight of the product. A maximum amount of 55% of sugar is desired. Invert sugar may be preferably used to lower the water activity of the confectionery. However, other ingredients such as polyols (glycerol, sorbitol, mannitol, and xylitol) can be used alone or in conjunction with the inverted sugar to achieve the water activity level. The use of polyhydric alcohols gives the advantage to keep the sugar content of the confectionery in lower reasonable limits. A lower water activity will ensure a longer shelf life of the product. Preferably, the confectionery of the invention has a water activity lower than or equal to 0.65, preferably, about 0.35 At this lower value, the expected shelf life is no less than 9 months.

The vegetable-based and fat portion of the confectionery can also comprise whey lactase or milk powder in suitable amounts to change the structure and/or mouthfeel of the product.

The confectionery of the invention encompasses the bar-shaped multi-layered confectionery, wafer confectionery, biscuit confectionery and the moulded chocolate bars, slabs, clusters or rochers containing a refined mixture of non-cereal vegetable and fat filling for the centre. The vegetable-based and fat portion can be used in several different manners, preferably as a structural arrangement as a core, interleaving layer or surface layer of the confectionery. Fruit-based layers can be interposed as intermediate layers between two vegetable-based layers, or vice-versa. In order to give a sufficient nutritional and/or organoleptic influence and perception to the confectionery, the vegetable-based and fat portion, will usually have a size as a component having generally its main dimensions all in excess of 3 mm, and preferably 5 mm.

The invention also relates to a method for producing a confectionery product containing at least 15 % by weight of non-cereal vegetable solids in a continuous solid fat phase; the fat being in an amount effective to impart a set and stable confectionery shaped structure; wherein it comprises:
(i) melting the fat and mixing said non-cereal vegetable solids to the melted fat ;
(ii) refining the mixture in a manner effective to reduce the particle size of the vegetable solids ;
(iii) allowing the mixture to cool and set in a defined solid shape.

In a preferred aspect of the invention, the particle size of the vegetable solids is reduced in the refining stage to a size equal to or less than 80 microns.

Preferably, after refining the fat base, the fat base is processed; i.e., after complete melting by cooling to the point of crystallisation of the fat, to ensure the development of stable crystals in the fat. More preferably, the fat comprises added cocoa butter and/or vegetable fat. As vegetable fat, the use of cocoa butter equivalents and/or cocoa butter replacers whose have crystallisation properties are preferred.
FIG. 1 shows a multi-layered vegetable and cereal bar partly coated with chocolate as a first embodiment of the invention corresponding to following example 1.
FIG. 2 shows a vegetable centre filled wafer tube as a second variant corresponding to following example 2.
FIG. 3 shows a fat and vegetable centre filled and chocolate moulded cluster or bar.
FIG. 4 shows a vegetable and fat confectionery crisp as a fourth variant of the invention corresponding to following specific example 3 and 4.
FIG. 5 shows in exploded perspective view a confectionery product of vegetable and fat shell and filling as a fifth variant of the invention corresponding to following example 5.
FIG. 6 shows a perspective view of the confectionery product of FIG. 5.

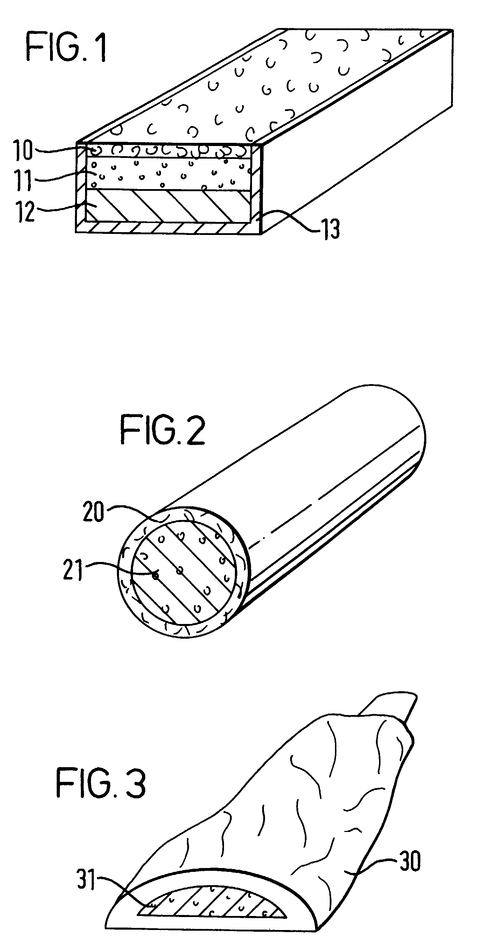

The multi-layered bar-shaped assembly of FIG. 1 comprises a first portion 10 made of a mixture of non-cereal vegetable and fat-based component, preferably chocolate fat (e.g. cocoa butter) or equivalent fat. Optionally, an amount of cereal-based component can be added to lighten the structure of the first portion such as small pieces of cereal grains or flakes. A second portion 11 of aerated mixture of non-cereal vegetable component, milk-based component and optionally, added sugar component is adhered to the first portion. The combination of a crispy vegetable and cereal layer and a creamy interior vegetable layer very surprising provides a balanced mouthfeel to the confectionery. Optionally, a vegetable-based paste consisting of at least 60% of vegetable solids, forming a third layer 12, is set adjacent the second portion. Finally, a fat-based coating 13, preferably a chocolate-based layer, partly enrobes the bottom surface of the third portion and the side surfaces of the multi-layered vegetable assembly so as to form a homogeneous bar protected from rancidity. Of course, other possible alternatives can be envisioned where the layers 10, 11 and 12 are combined at least two by two in all possible combinations.

The tubular-shaped assembly of FIG. 2 comprises a relatively thick sugar-based wafer tube 20 of about 80mm-long in which is filled a centre 21 made of a vegetable-based portion and 2mm-thick as previously defined. The cohesion of the vegetable is of less importance than in the previous example, as the wafer tube prevents the vegetable-based portion from breaking up. However, a certain amount of fat contained in ingredients such as chocolate or other fat such as added vegetable- or animal fat has proved to be necessary to reach an acceptable level of confectionery. Technically, the vegetable-based product with fat can be so more easily pumped into the interior of the wafer. In an alternative, the wafer element could be replaced by any suitable type of biscuit.

FIG. 3 illustrates another variant in which the vegetable-based component forms the centre 31 of a fat-based coating of sufficient stiffness and thickness to retain the shape of the confectionery and avoid spilling or breaking of the vegetablebased component. For example, the outer coating 30 can be a dark, milk or white chocolate moulded material. The centre can be a mass of refined mixture of vegetable solids and fat. In an alternative, the centre 31 can also be an aerated or plain refined vegetable and fat-based mixture.

In the followings examples specific preferred embodiments are disclosed utilising the combinations that have previously been described. It will be understood that other mixtures including fruits, nuts, grains, vegetables or any combinations of these ingredients may also be used and as such, are intended to be within the scope of this invention.

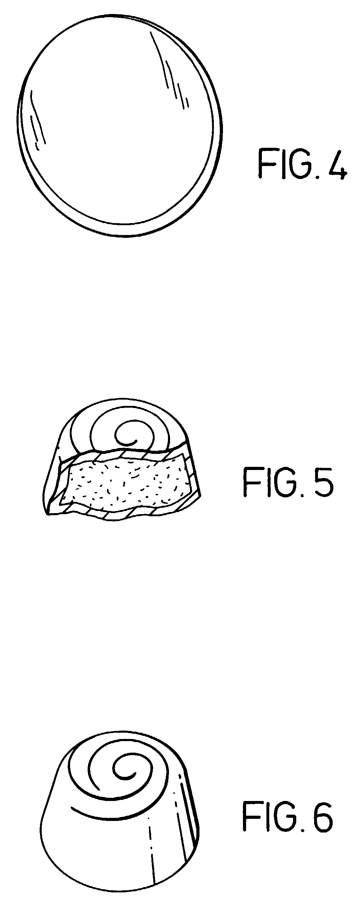

FIG. 4 illustrates another possible embodiment of the invention where vegetable and fat confectionery crisps can be moulded from a melted a refined vegetable and fat mixture. The crisps are obtainable by roasting of pure or reconstituted vegetable flakes which are homogeneously mixed and refined to reach the desired fineness, preferably below 40 microns, with a suitable amount of fat, preferably cocoa butter or cocoa butter equivalents or replacers. It is surprising to notice that the vegetable solids can partly or entirely replace the cocoa solids of chocolate thus resulting in a moulded product that has a texture very similar to the texture of chocolate with a good snap and a smooth mouthfeel and also a taste which can be similar to the taste of chocolate when cocoa butter is used. Of course, small whole pieces of vegetable could also be added to add a specific texture and/or a more pronounced vegetable taste.

In FIG. 5, the confectionery product is a solid vegetable and fat shell comprising an aerated vegetable and fat filling. The shell comprises a fat which can be tempered to form a suitable level of crystallisation of the shell. Fat crystallisation promotes a good snap and a gloss effect to the shell. Cocoa butter or a vegetable fat having similar chemical and physical characteristics to cocoa butter can be used. The vegetable fat are generally known as "cocoa butter equivalents" (CBEs) or "cocoa butter replacers" (CBRs) or other substitute fats of cocoa butter. Details in CBEs and CBRs are given in literature reference "Industrial Chocolate Manufacture And Use", Third Edition, by S. T. Beckett, pages 311 to 322; the content of which is herein enclosed by reference. Cocoa butter will give a more pronounced chocolate taste to the confectionery whereas a CBE, for example, will be more neutral. The shell is produced by a method similar to the one used for making chocolate shells using a standard shell forming equipment. The process generally consists in filling a mould, shaking, forming the shell by turning the mould upside down, oscillating and vibrating the mould to remove the deposited excess. The filling is then deposited into the hollow open cavity by suitable depositing means. Bottoming is carried out with the same material as the shell until final cooling. Then, demoulding is carried out.

### EXAMPLE 1 - Cereal and vegetable bar partly coated with chocolate

**TABLE 1**

| **1.A. CEREAL AND VEGETABLE WASH** | **% BY WEIGHT******* |
|---|---|
| Puffed cereals (6 cereals) | 0.72 |
| Corn Flakes | 2.39 |
| Freeze-dried sweet corn | 2.30 |
| Freeze dried broccoli pieces (10 mm) | 0.86 |
| Strawberry pieces (5-10 mm) | 0.86 |
| Chocolate | 8.63 |
| Cocoa butter | 2.30 |
| Subtotal | 18.07 |

| | |
|---|---|
| * Percent by weight/Total weight of the full recipe | |

The corn flakes were chopped to small pieces of 2-5 mm. The vegetable pieces and strawberries were also cut with a knife into little pieces of 2-5 mm. All the ingredients were then mixed. The chocolate and cocoa butter were melted while stirring. Then, the mixed ingredients were blended with the fat-based compound.

**Table 2**

| **1.B. BASE MIX:** | **% BY WEIGHT******* |
|---|---|
| Icing sugar | 4.05 |
| Skim milk powder | 4.05 |
| Vegetable fat (Whipping fat) | 3.01 |
| Dextrose mono-hydrate | 1.16 |
| Sub-total | 12.26 |

| | |
|---|---|
| * Percent by weight/Total weight of the full recipe | |

The whipping fat was melted and then added to the other ingredients. These were blended using a Hobart mixer. Then, a three-cylinder roller mill was used to refine the base mix. This stage of fine grinding of the vegetable solids is important as it confers the final texture of the confectionery product. Grinding is carried out below the normal limits that is found for normal spray dried vegetable powder (for which the particle size is higher than 100 microns).

**Table 3**

| **1.C. SWEET CORN AERATED CREAM** | **% BY WEIGHT******* |
|---|---|
| Base mix (1.b.) | 12.26 |
| Vegetable fat | 3.92 |
| Freeze-dried sweet corn | 4.90 |
| Subtotal | 21.08 |

| | |
|---|---|
| * Percent by weight/Total weight of the full recipe | |

The dried sweet corn was added into the refined base mix. Further grinding was carried out in a three-cylinder roll refiner. Then, non-melted vegetable fat was added to the refined mix and further mixing was carried out using a Hobart mixer.

The mix was aerated up to density of 0.9 using a Morton pressure mixer. The aeration was achieved after 30 seconds at a speed of 150 rpm/min. Aeration was conducted at 1.5 bars for 4 min. 30 sec.

**Table 4**

| **1.D. SWEET CORN FILLING AND COATING** | **% BY WEIGHT******* |
|---|---|
| Sweet corn paste | 36.14 |
| Plain dark milk chocolate | 24.70 |
| Sub-total | 60.84 |

| | |
|---|---|
| * Percent by weight/Total weight of the full recipe | |

The vegetable and cereal bar was assembled as follows: A first layer of sweet corn paste was deposited between 4-mm laths. A second layer of sweet corn aerated cream (1.c. of Table 3) was deposited between second 4-mm laths. On top of the cream layer, a layer of vegetable and cereal wash (1.a. of Table 1) was deposited between third 4-mm laths and was left to set. Plain dark milk chocolate was melted and used to prebase the bar. The bar was cut to 80X25 mm using a knife.

The finished bar weighted 33.2 grams and had the following ingredients and proportions given in table 5.

**Table 5**

| **INGREDIENTS** | **WGT IN G** | **WGT IN %** |
|---|---|---|
| Vegetable and cereal wash | 6.00 | 18.07 |
| Sweet corn aerated cream | 7.00 | 21.08 |
| Sweet corn paste | 12.00 | 36.14 |
| Dark milk chocolate | 8.20 | 24.70 |
| Total: | 33.20 | 100.00 |

### EXAMPLE 2 - Vegetable filled wafer tube

**Table 6**

| **2.A. SWEET CORN/CARROT BASE:** | **% BY WEIGHT******* |
|---|---|
| Sweet corn paste | 10.83 |
| Carrot paste | 24.36 |
| Vegetable fat | 24.36 |
| Invert sugar | 6.77 |
| Glycerol | 1.35 |
| Lecithin | 0.41 |
| Subtotal: | 54.33 |

| | |
|---|---|
| * Percent by weight/Total weight of the full recipe | |

The invert sugar was mixed with glycerol in a Hobart mixer. Sweet corn and carrot paste were added and mixed to the invert sugar and glycerol. Lecithin was then added. Vegetable fat was then added and mixed in the Hobart mixer. Then, the combination was refined using a three roll refiner.

**Table 7**

| **2.B. VEGETABLE FILLING:** | **% BY WEIGHT******* |
|---|---|
| Sweet corn base (2.a.) | 54.33 |
| Green and white leek flakes | 4.06 |
| Mixed pepper granules | 4.06 |
| Whole Sweet corn | 3.38 |
| Carrot ¼ diced | 3.38 |
| Tomato/Basil grains | 4.06 |
| Subtotal | 73.50 |

| | |
|---|---|
| * Percent by weight/Total weight of the full recipe | |

The carrot pieces were dipped in the invert sugar from mix 2.a. of Table 6. Then, the vegetable and the sweet/corn base were added while stirring carefully.

The vegetable filling so obtained was used to fill a thick sugar wafer tube using a piping bag.

The finished filled wafer tube weighted 20 grams and had the following ingredients and proportions given in table 8.

**Table 8**

| **INGREDIENTS** | **WGT IN G** | **WGT IN %** |
|---|---|---|
| Sugar wafer tube 20X80 | 5.30 | 26.50 |
| Vegetable filling | 14.70 | 73.50 |
| Total: | 20.0 | 100.00 |

### EXAMPLE 3 - Sweet potato crisps

A roasted sweet potato fat product in a crisp shape is produced from a base mix comprising the ingredients of Table 9.

**Table 9**

| **4.1 BASE MIX** | **WT IN G** | **WT IN %**^{**2**} |
|---|---|---|
| Roasted sweet potato flakes | 300 | 56.24 |
| Vegetable fat¹ | 150 | 28.12 |
| Sugar | 25 | 4.69 |
| Salt | 5 | 0.94 |
| Sub-Total | 480 | 89.99 |

| | | |
|---|---|---|
| ⁽¹⁾ Illexao 30/69 (Equivalent cocoa butter) | | |
| ⁽²⁾ % by weight of the full recipe | | |

The sweet potato flakes are roasted to a desired degree in an oven at 200°C without using ventilation. Then, the roasted flakes are cooled down and the other ingredients are added. The combination is mixed in a Hobart mixer and then refined using a three rolls refiner.

The potato fat base is further prepared with the base mix from the ingredients of table 10 which follows.

**Table 10**

| **4.2 - POTATO CHOCOLATE** | **GRAMS** | **% BY WEIGHT** |
|---|---|---|
| Base mix of 4.1. | 480 | 89.99 |
| Vegetable fat¹ | 50 | 9.37 |
| Lecithin | 3.40 | 0.64 |
| Total | 533 | 100.00 |

| | | |
|---|---|---|
| ⁽¹⁾ Illexao 30/69 (Equivalent cocoa butter) | | |

The cocoa butter is mixed until it fully melts in a Hobart mixer. The refined mix (4.1) is added to the melted cocoa butter and the combination is mixed in the Hobart mixer during about one hour. At the end of mixing, the lecithin is added and mixing is maintained during about 10 minutes.

Then assembling is carried out as follows. The potato fat base, as obtained, is tempered like a regular chocolate. It must be noted that the vegetable fat used is tempered vegetable fat having similar characteristics to the cocoa butter. The tempering ensures the development of stable crystals in the fat. It provides a good snap and a gloss effect in the final product in a manner similar to a chocolate crisp. The tempering consists in lowering the temperature to a seeding temperature of about 26-27°C, then, the temperature is increased to 29-30°C. Addition of lecithin may slightly lower the seeding temperature.

The tempered base is deposited on a perforated rubber belt with a plurality of oval apertures resting flat on a table. Before the compound hardens, the flat crisps are disposed on curved moulds to have the final crisp shape set.

Crispa of potato and fat are obtained that weigh each about 4 grams. The crisps have a salted and potato taste but a good texture very similar to a chocolate product with a good snap and gloss.

### EXAMPLE 4 - Sweet potato and chocolate crisps

The same type of product is prepared as in Example 3 except that the vegetable fat is replaced by cocoa butter in about the same proportion as the vegetable fat and the amount of salt is slightly reduced. The final product has about the same good snap and gloss but the taste is closer to chocolate and the potato taste is a bit hidden by the chocolate taste.

### EXAMPLE 5 - Sweet potato chocolate shell and buttered potato filling

A straight line of sweet potato chocolates is manufactured. The chocolates comprise a buttered potato filling in moulded potato compound shells.

A base mixture is prepared from the ingredients of table 14 which follows.

**Table 11**

| **5.1. BASE MIX** | **GRAMS** | **% BY WEIGHT** |
|---|---|---|
| Roasted sweet potato flakes | 300 | 28.12 |
| Cocoa butter | 150 | 14.06 |
| Sugar | 25 | 2.34 |
| Salt | 5 | 0.47 |
| Subtotal | 480 | 44.99 |

| | | |
|---|---|---|
| (* % By weight of the full recipe) | | |

The same preparation as for the base mix of Example 3 is carried out.

The shell is then prepared using the ingredients of table 12.

**Table 12**

| **5.2. POTATO CHOCOLATE** | **GRAMS** | **% BY WEIGHT******* |
|---|---|---|
| Base mix | 480 | 44.99 |
| Cocoa butter | 50 | 4.69 |
| Lecithin | 3.4 | 0.32 |
| Subtotal | 533 | 50.00 |

| | | |
|---|---|---|
| (* % by weight of the full recipe) | | |

The same preparation of the potato chocolate as in Example 4 or 5 is carried out.

Separately, the filling is prepared comprising a base mix with the ingredients of table 13.

**Table 13**

| **5.3. FILLING BASE MIX** | **GRAMS** | **% BY WEIGHT******* |
|---|---|---|
| Icing sugar | 1750 | 11.31 |
| Skim milk powder | 1750 | 11.31 |
| Vegetable whipping fat | 1300 | 8.4 |
| Dextrose mono-hydrate | 500 | 3.23 |
| Sub-total | 5300 | 34.25 |

| | | |
|---|---|---|
| (* % by weight of the full recipe) | | |

The filling base mixture is prepared by melting the whipping fat and adding the other ingredients to the melted fat. The mixing is carried out in a Hobart mixer and refined using a three rolls refiner.

The filling base mix is used to prepare the buttered potato filling having the ingredients reported in table 14.

**Table 14**

| **5.4. BUTTERED POTATO FILLING** | **GRAMS** | **% BY WEIGHT******* |
|---|---|---|
| Base mix | 120 | 34.25 |
| Icing sugar | 20 | 5.71 |
| Vegetable whipping fat | 19.98 | 9.99 |
| Buttered potato flavour | 0.17 | 0.05 |
| Subtotal | 175.17 | 50.00 |

| | | |
|---|---|---|
| (* % by weight of the full recipe) | | |

The vegetable fat when still solid (not melted) and the other ingredients are added into the refined base mixture and a suitable level of mixing is performed using a Hobart mixer for 30 seconds at speed 150 rpm/min. Then, the mixture is aerated up to a density of 0.9 using a Morton pressure mixer at a pressure of about 1.5 bar for 4 minutes and 30 seconds.

The assembling of the potato chocolate shell and aerated potato filling is then carried out. For that, the potato compound is tempered like a regular chocolate and then moulded to make shells. The shells are then left to set. Then, an amount of filling of buttered potato is deposited into the shells using a piping bag. The shells are further sealed with the potato chocolate base so as to make the bottoms of the shells. The confectionery is allowed to cool down and is then demoulded. The weight and proportions of the confectionery are reported in table 18.

**Table 15**

| **INGREDIENTS** | **GRAMS** | **% BY WEIGHT** |
|---|---|---|
| Potato shell | 3.4 | 34.00 |
| Buttered filling | 5.00 | 50.00 |
| Potato back-off | 1.6 | 16.00 |
| Total: | 10.00 | 100.00 |

The final confectionery product looks like a straight line of chocolates; each single one having a diameter of 2.7 mm, a height of 2.2 mm and a weight of 10 grams. The confectionery product has a taste close to chocolate.

## Claims

1. A confectionery product with at least a part of which comprises of non-cereal vegetable solids and solid fat characterized in that the non-cereal vegetable solids are present under the form of particles in an amount of at least 15 % by weight of the total weight confectionery product and the non-cereal vegetable solids are mixed in a continuous phase of fat to provide a shaped fat-based product upon setting.

2. A confectionery product according to claim 1, wherein the non-cereal solids are present with the fat in the form of finely ground particles of a size equal to or less than 80 microns.

3. A confectionery product according to claim 2, wherein the non-cereal solids are present with the fat in the form of finely ground particles of a size equal to or less than 40 microns.

4. A confectionery product according to any of claims 1, 2 or 3 wherein the non-cereal vegetable solids are present in an amount ranging from 30 to 60 % by weight of the total confectionery product.

5. A confectionery product according to any of claims 1 to 4 wherein the non-cereal vegetable solids and fat form the centre filling and a fat-based shell surrounds the non-cereal vegetable and fat filling.

6. A confectionery product according to any of claims 1 to 5, wherein the non-cereal vegetable solids is made from dried vegetable pieces, dried vegetable powder, vegetable paste or vegetable distillate or concentrate or a mixture thereof.

7. A confectionery product according to any of claims 1 to 6, wherein the non-cereal vegetable component is selected from the group consisting of potatoes, beans, lentils, peas, asparagus, aubergine, basil, beetroot, broccoli, Brussel sprout, cabbage, carrots, cauliflower, celery, chicory, courgette, cucumber, curly kale, fennel, garlic, gherkins, gourd, leeks, lettuce, marrow, mushrooms, okra, onions, parsnip, peppers, plantain, pumpkin, quorn, radish, spinach, spring greens, swede, sweetcorn, tomato, turnip, watercress, yam, zucchini, and any mixture thereof.

8. A confectionery product according to any of the preceding claims wherein the fat part represent at least 25 % by weight of the product.

9. A confectionery product according to any of the preceding claims wherein the ratio non-cereal vegetable solids : fat is in an amount of 1:2 to 3:1.

10. A method according to any of the preceding claims, wherein the fat is chosen among fat solid at room temperature, melting in mouth and adapted to cause stable crystallisation when processed before moulding.

11. A confectionery product according to claim any of the preceding claims wherein, the fat comprises fat selected among the list consisting of cocoa butter, cocoa butter equivalent (CBE), cocoa butter replacer (CBR), other crystallisable vegetable fat and a compound thereof.

12. A confectionery product according to any of the preceding claims wherein, the further comprises a cereal-based component.

13. A confectionery product according to claim 12, wherein the cereal-based component comprises up to 40% by weight of the product.

14. A confectionery product according to claim 12 or 13, wherein the cereal-based component is selected from the group consisting of corn, oats, wheat, barley, rye, rice, millet, malt and a mixture thereof.

15. A confectionery product according to any of the preceding claims, wherein the mixture comprises added sugar.

16. A confectionery product according to claim 15, wherein the added sugar is present in an amount up to 55% by weight in the product.

17. A confectionery product according to claim 15 or 16, wherein the added sugar component is selected from the group of glucose, lactose, fructose, sucrose, maltose, dextrose, polydextrose, maltodextrin, inverted sugar, a product of enzymatic saccharification of starch, and mixture thereof.

18. A confectionery product according to any of the preceding claims, wherein it comprises
a first portion comprising a mixture of non-cereal vegetable component and a fat-based component and,
a second portion comprising an aerated mixture of a non-cereal vegetable component and a milk-based and optionally added sugar component, the two portions being positioned adjacent one another in a set configuration.

19. A confectionery product according to claim 18, wherein the first portion further comprises a cereal-based component.

20. A confectionery product according to claim 18 or 19, wherein it further comprises a third portion of a non-cereal vegetable paste; the third portion being adjacent to the second portion.

21. A confectionery product according to any of claims 18, 19 or 20, wherein the portions are at least partly enrobed with a fat-based layer.

22. A confectionery product according to claim 21, wherein the fat-based layer is a chocolate-based layer.

23. A confectionery product according to any of claims 1 to 17, wherein the product has the general shape of a bar, slab, rocher, cluster or crisp.

24. A confectionery product according to claim 23, wherein the product is non-cereal vegetable and fat shell with a filling comprising non-cereal vegetable solids and fat.

25. A confectionery product according to any of claims 1 to 17, wherein the non-cereal vegetable and fat mixture is arranged adjacent to a wafer element or a biscuit element.

26. A confectionery product according to claim 24, wherein the wafer or biscuit element is a tube, a boat-shaped element or a plate-like element.

27. A method for producing a confectionery product containing at least 15 % by weight of non-cereal vegetable solids in a continuous solid fat phase; the fat being in an amount effective to impart a set and stable confectionery shaped structure; wherein it comprises:
(i) melting the fat and mixing said non-cereal vegetable solids to the melted fat ;
(ii) refining the mixture in a manner effective to reduce the particle size of the vegetable solids so as to obtained a refined fat base;
(iii) allowing the refined fat base to cool and set in a defined solid shape.

28. A method according to claim 27, wherein the particle size of the vegetable solids is reduced in the refining stage to a size equal to or less than 40 microns.

29. A method according to claim 27 or 28, wherein after refining the fat base, the fat base is tempered or at least processed to ensure development of stable crystals in the fat.

30. A method according to claim 26, 27 or 28 wherein the fat comprises added cocoa butter and/or vegetable fat.
